# EUROPÄISCHE PATENTSCHRIFT

(11) **EP 2 188 511 B1**
(45) Veröffentlichungstag und Bekanntmachung des Hinweises auf die Patenterteilung: **12.08.2015**
(21) Anmeldenummer: 08773650.0
(22) Anmeldetag: 25.06.2008
(51) Int. Cl.: F02D 41/14

(54) **VERFAHREN ZUR LAMBDA-REGELUNG IN BETREIBSBEREICHEN MIT KRAFTSTOFF-MANGEL ODER KRAFTSTOFF-ÜBERSCHUSS BEI EINER NERNST-SONDE**
METHOD FOR LAMBDA REGULATION IN OPERATING AREAS WITH LOW FUEL OR EXCESS FUEL WITH A NERNST SENSOR
PROCÉDÉ DE RÉGULATION DU LAMBDA DANS LES PLAGES DE FONCTIONNEMENT À MANQUE DE CARBURANT OU À EXCÈS DE CARBURANT POUR UNE SONDE DE NERNST

(30) Priorität: 14.08.2007 DE 102007038478
(43) Veröffentlichungstag der Anmeldung: 26.05.2010
(73) Patentinhaber: Volkswagen Aktiengesellschaft, 38440 Wolfsburg (DE)
(72) Erfinder: HAHN, Hermann, 30175 Hannover (DE)
(86) Internationale Anmeldenummer: PCT/EP2008/005144
(87) Internationale Veröffentlichungsnummer: WO 2009/021578

(56) Entgegenhaltungen:
- EP-A- 1 136 670
- DE-A1- 10 339 063
- DE-A1-102005 044 729
- DE-A1-102006 049 656

## Beschreibung

Die Erfindung betrifft ein Verfahren zur λ-Regelung bei einem Verbrennungsmotor nach dem Oberbegriff des unabhängigen Patentanspruchs.

Zur Erfüllung der gesetzlichen Vorgaben an die zulässigen Abgasemissionen bei Verbrennungsmotoren von Kraftfahrzeugen ist eine hohe Wirksamkeit von Abgasreinigungsmaßnahmen notwendig. Eine diese Maßnahmen ist eine möglichst genaue Einstellung der Abgaszusammensetzung dergestalt, dass ein im Abgassystem befindlicher Katalysator möglichst wirkungsvoll arbeiten kann. Um bei heutigen Drei-Wege-Katalysatoren eine hohe Konvertierungsleistung zu erreichen, werden diese mit Abgas beaufschlagt, welches wechselnd einen leichten Kraftstoff-Überschuss (fett) oder einen leichten Sauerstoffüberschuss (mager) aufweist. Nach Stand der Technik wird diese sogenannte Lambda-Modulation über vor dem Katalysator eingebaute Lambdasonden geregelt. Es ist ferner bekannt, einen vorderen Lambdaregelkreis mit einem stromab des Verbrennungsmotors und stromauf des Katalysators angeordneten vorderen Sauerstoffsensor und einen hinteren Lambdaregelkreis mit zumindest einem stromab des Katalysators angeordneten hinteren Sauerstoffsensor vorzusehen. Ferner ist es bekannt, die Regelqualität durch die Auswertung der Sondensignale zu beeinflussen. Beispielsweise zeigen DE 4320881 und EP 1136670 A1 eine Kombination einer λ-Sonde mit sprungförmiger beziehungsweise binärer Sondencharakteristik mit einer weiteren λ-Sonde.

Darüber hinaus wird bei Erreichen maximal zulässiger Temperaturen im Abgassystem oder zum Erreichen einer höheren Motorleistung üblicherweise der Bereich des geregelten Betriebes verlassen und eine Anreicherung mit Kraftstoff vorgenommen.

Bei den eingesetzten Lambdasonden unterscheidet man im wesentlichen zwei verschiedene Bauarten. Breitband-Lambdasonden sind in der Lage, auch bei Lambda ungleich 1 ein hinreichend genaues Signal zu liefern. Werden solche Sonden zu Regelung der Lambda-Modulation eingesetzt, so kann der gewünschte Überschuss an Kraftstoff oder Luft genau eingeregelt werden. Ein weiterer Vorteil von Breitband-Lambdasonden ist es, dass auch in Betriebszuständen mit Kraftstoff-Überschuss das Gemischverhältnis vergleichsweise genau eingeregelt werden kann.

Sprung-Lambdasonden nach dem Nernst-Prinzip sind preiswerter als Breitband-Lambdasonden, können jedoch nur im Bereich um Lambda=1 mit hoher Genauigkeit messen. Aus diesem Grunde wertet die Regelung nach Stand der Technik lediglich aus, ob sich das Sondensignal ober- oder unterhalb einer festgelegten Lambda=1-äquivaltenten Signalspannung befindet. Bei magerer oder fetter Abgaszusammensetzung ist das abgegebene Signal sehr flach und insbesondere bei Alterung der Sonde toleranzbehaftet. Die Lambda-Modulation wird nach Stand der Technik in diesen Bereichen gesteuert am Motor eingestellt, wodurch sich u.U. aufgrund einer ungenauen motorischen Vorsteuerung Werte ergeben, die von den Werten abweichen, welche für eine optimale Abgasreinigung benötigt werden.

Auch die Betriebszustände mit Kraftstoff-Überschuss oder -Mangel werden aus diesen Gründen nach Stand der Technik nur gesteuert angefahren, bestenfalls wird überwacht und zusätzlicher Kraftstoff zugegeben bzw. vermindert, wenn das Signal der Sprungsonde noch nicht oberhalb bzw. unterhalb der definierten Lambda=1-äquvalenten Signalspannung ist. Da die Vorsteuerung der Gemischzusammensetzung ebenfalls toleranzbehaftet ist, kommt es in diesen Betriebszuständen i.d.R. zu einem unnötig hohen Kraftstoffverbrauch. Um sicherzugehen, dass ein gewünschter Lambdawert von z.B. 0,96 bei allen möglichen Serienstreuungen der Sonden auch sicher erreicht wird, muss nämlich unter Berücksichtigung der Vorsteuertoleranzen i.d.R. ein weit fetteres Lambda vorgesteuert werden, als an sich notwendig wäre. Werden beispielsweise die Toleranzen der Vorsteuerung auf bis zu 5 % ermittelt, so muss dann bereits ein Lambdawert von 0,91 eingestellt werden obwohl nur für einen kleinen Teil der Fahrzeuge dieser Toleranzabstand auch tatsächlich nötig ist und somit der überwiegenden Teil der Fahrzeuge mit deutlich fetterem Lambda fahren wird, was gleichbedeutend mit größeren Kraftstoffverbrauch und größerer Umweltbelastung ist.

Aufgabe der Erfindung ist es, eine verbesserte, insbesondere in Betriebszuständen mit Kraftstoff-Überschuss oder Kraftstoff-Mangel, Gemischaufbereitung bei einem Verbrennungsmotor, insbesondere unter Verwendung einer λ-Sonde nach dem Nemst-Prinzip, anzugeben.

Die Aufgabe ist bei einem Verfahren zur λ-Regelung bei einem Verbrennungsmotor mit einer Motorsteuerung zur Gemischbildung, einer in einer Abgasanlage des Verbrennungsmotors angeordneten vorderen λ-Sonde zur Erzeugung eines einen vorderen Sauerstoffgehalt eines in der Abgasanlage stromaufwärts eines in der Abgasanlage angeordneten Katalysators geführten Abgases charakterisierenden vorderen Sondensignals, einer in der Abgasanlage stromabwärts des Katalysators angeordneten hinteren A-Sonde zur Erzeugung eines einen hinteren Sauerstoffgehalt des in der Abgasanlage stromabwärts des Katalysators geführten Abgases charakterisierenden hinteren Sondensignals, mit den Merkmalen des unabhängigen Anspruchs gelöst.

Erfindungsgemäß sind folgenden Schritte vorgesehen:
Ermitteln einer Korrelation durch Korrelieren des vorderen Sondensignals der vorderen A-Sonde mit einer Gemischzusammensetzung, Betreiben des Verbrennungsmotors in Betriebsbreichen mit Kraftstoff-Überschuss oder mit Kraftstoff-Mangel, Beeinflussen der Gemischzusammensetzung unter Zuhilfenahme des Sondensignals der vorderen λ-Sonde und der Korrelation, .Ermitteln einer systematischen Gemischabweichung mittels des hinteren Sondensignals, Vergleichen der ermittelten systematischen Gemischabweichung mit vordefinierten Schwellwerten, Beeinflussen der Gemischzusammensetzung unter Zuhilfenahme des vorderen Sondensignals der vorderen A-Sonde solange die ermittelte systematische Gemischabweichung zwischen den vordefinierten Schwellwerten liegt. Als Betriebsbereich mit Kraftstoff -Überschuss bzw, Kraftstoff-Mangel wird ein Betrieb mit einem Gemisch mit einem nicht stöchiometrischen Lambdawert kleiner als 0,98, vorzugsweise kleiner als 0.97 oder 0,95 bzw. grösser als 1, 02 , vorzugsweise größer als 1,03, 1,05 oder 1,95 verstanden.

Als systematische Gemischabweichung wird im Rahmen der Erfindung eine Abweichung der tatsächlichen von der gemessenen Gemischzusammensetzung auf Grund von Alterung und/oder der Sonde bezeichnet.

Vorteilhaft kann erfindungsgemäß auf möglicherweise auftretende Alters- und/oder Vergiftungserscheinungen der vorderen A-Sonde reagiert werden. Es kann beispielsweise beim Überschreiten der vordefinierten Schwellwerte von einem geregelten Betrieb in einen herkömmlichen gesteuerten Betrieb umgeschaltet werden, der trotz der notwendigen Toleranzzugaben dann bessere Ergebnisse liefert als eine auf einer stark gealterten A-Sonde basierende Regelung liefern würde.

Vorteilhaft kann unter Zuhilfenahme des vorderen Sondensignals ein gewünschter λ-Wert, insbesondere bei einem Betriebsbereich mit Kraftstoffüberschuss, exakter eingeregelt werden. Vorteilhaft kann dadurch, insbesondere im Vergleich zu vorgesteuerten Systemen, ein aufgrund von Vorsteuertoleranzen gegebenenfalls zu fettes Lambda vermieden werden, wodurch sich eine insgesamt kraftstoffverbrauchsverringemde Gemischbildung ergibt.

Eine weitere bevorzugte Ausführungsform des Verfahrens weist folgenden Schritt auf: Ermitteln der Gemischabweichung in weiteren Gemischbereichen, insbesondere mit im wesentlichen stöchiometrischer Gemischzusammensetzung, wobei eine Regelung der Gemischzusammensetzung mittels der Korrelation erfolgt. Vorteilhaft kann die ermittelte systematische Gemischabweichung Aufschlüsse über den Zustand der vorderen λ-Sonde und/oder die Güte der Korrelation liefern.

Eine weitere bevorzugte Ausführungsform des Verfahrens weist zumindest einen der folgenden Schritte auf: Ermitteln eines A-Wertes mittels des vorderen Sondensignals und einer Umrechnungsvorschrift, Beeinflussen der Gemischzusammensetzung unter Zuhilfenahme des ermittelten λ-Wertes. Die Regelung kann vorteilhaft direkt in der Größe Lambda erfolgen.

Eine weitere bevorzugte Ausführungsform des Verfahrens weist zumindest einen der folgenden Schritte auf: Regeln und/oder Einstellen der Gemischzusammensetzung mittels eines eine Zwei-Punkt-Regelung realisierenden vorderen Reglers, Umschalten des vorderen Reglers jeweils falls der ermittelte λ-Wert einen vordefinierten λ-Schwellwert erreicht, überschreitet oder unterschreitet, Umschalten des vorderen Reglers jeweils falls der ermittelte λ-Wert einen vordefinierten fetten λ-Schwellwert oder einen mageren λ-Schwellwert erreicht, überschreitet oder unterschreitet. Ein Zwei-Punkt-Regler lässt sich vorteilhaft vergleichsweise einfach realisieren und/oder robust auslegen. Im Betriebsbereich mit Kraftstoff-Überschuss kann der λ-Wert um den fetten A-Schwellwert und im Betriebsbereich mit Kraftstoff-Mangel um den mageren λ-Schwellwert oszillieren.

Eine weitere bevorzugte Ausführungsform des Verfahrens weist folgenden Schritt auf: Steuern der Gemischzusammensetzung zwischen dem jeweiligen Umschalten in einer ersten ansteigenden Rampe und in einer zweiten fallenden Rampe. Es ist möglich, den λ-Wert oszillierend um den λ-Schwellwert einzuregeln, wobei die Steigungen der Rampen neben anderen Faktoren die Frequenz der Schwingung bestimmen.

Bei einer weiteren bevorzugten Ausführungsform des Verfahrens weisen die Rampen unterschiedliche Steigungen auf. Vorteilhaft ist es, mittels der unterschiedlichen Steigungen der Rampen möglich, einen λ-Wert einzuregeln, der im wesentlichen größer oder kleiner ist als der Schwellwert. Dies kann beispielsweise bei Kraftstoffüberschuss dazu ausgenutzt werden, dass der λ-Wert im wesentlichen unterhalb eines gewünschten λ-Schwellwertes liegt, also mindestens eine gewünschte Überfettung der Gemischzusammensetzung einhält. Dadurch kann das Signal bzw. der eingeregelte λ-Wert möglichst schnell aus einem kritischen Bereich gebracht werden und mit der darauf folgenden flacheren Rampe langsam wieder an diesen herangesteuert werden.

Bei einer weiteren bevorzugten Ausführungsform des Verfahrens ist/sind der fette λ-Schwellwert und/oder der magere λ-Schwellwert von der ermittelten systematischen Gemischabweichung abhängig. Vorteilhaft können die λ-Schwellwerte so angepasst werden, dass sich die systematische Gemischabweichung nicht mehr oder zumindest nur in einem geringeren Maße negativ auf die Regelungsgüte auswirkt.

Eine weitere bevorzugte Ausführungsform des Verfahrens weist zumindest einen der folgenden Schritte auf: Adaptieren und/oder Korrigieren der Umrechnungsvorschrift mittels und/oder unter Berücksichtigung der ermittelten systematischen Gemischabweichung, Ermitteln des λ-Wertes, wobei das Sondensignal und/oder die Umrechnungsvorschrift der systematischen Gemischabweichung entgegenwirkend adaptiert und/oder korrigiert werden. Vorteilhaft kann trotz einer möglicherweise vorhandenen systematischen Gemischabweichung mittels der Adaption bzw. Korrektur ein möglichst genauer λ-Wert ermittelt werden.

Bei einer weiteren bevorzugten Ausführungsform des Verfahrens handelt es sich bei der vorderen λ-Sonde um eine Sprung-λ-Sonde. Die Sprung-λ-Sonde kann beispielsweise einen Sauerstoffsensor nach dem Nemst-Prinzip aufweisen. Sprung-λ-Sonden sind in der Regel im Vergleich zu Breitband-λ-Sonden kostengünstiger herzustellen. Das vorgeschlagene Verfahren ermöglicht trotz der Verwendung einer solchen Sprung-λ-Sonde, die systembedingt in fetten und mageren Abgaszusammensetzungen eine verhältnismäßig geringe, insbesondere toleranzbehaftete, Signalauflösung aufweisen kann, dennoch eine gute λ-Messung und/oder Regelung.

Die Aufgabe ist außerdem durch ein Kraftfahrzeug mit einem und/oder ausgerüstet zur Realisierung eines vorab beschriebenen Verfahrens gelöst.

Weitere Vorteile, Merkmale und Einzelheiten ergeben sich aus der nachfolgenden Beschreibung, in der unter Bezugnahme auf die Zeichnung ein Ausführungsbeispiel im einzelnen beschrieben ist. Gleiche, ähnliche und/oder funktionsgleiche Teile sind mit gleichen Bezugszeichen versehen.

Es zeigen:
- Figur 1: ein Schaubild einer λ-Regelung für einen Verbrennungsmotor;
- Figur 2: ein Diagramm zu der in Figur 1 gezeigten A-Regelung eines mittels eines vorderen Sondensignals ermittelten λ-Werts sowie einer zugehörigen Einspritzmenge jeweils über der Zeit; und
- Figur 3: ein Diagramm zu der in Figur 1 gezeigten λ-Regelung einer mit Hilfe eines hinteren Sondensignals ermittelten systematischen Gemischabweichung.

Unter Regeln und/oder Einstellen wird im Rahmen der Erfindung ein beliebiges Steuer- und/oder Regelverfahren verstanden.

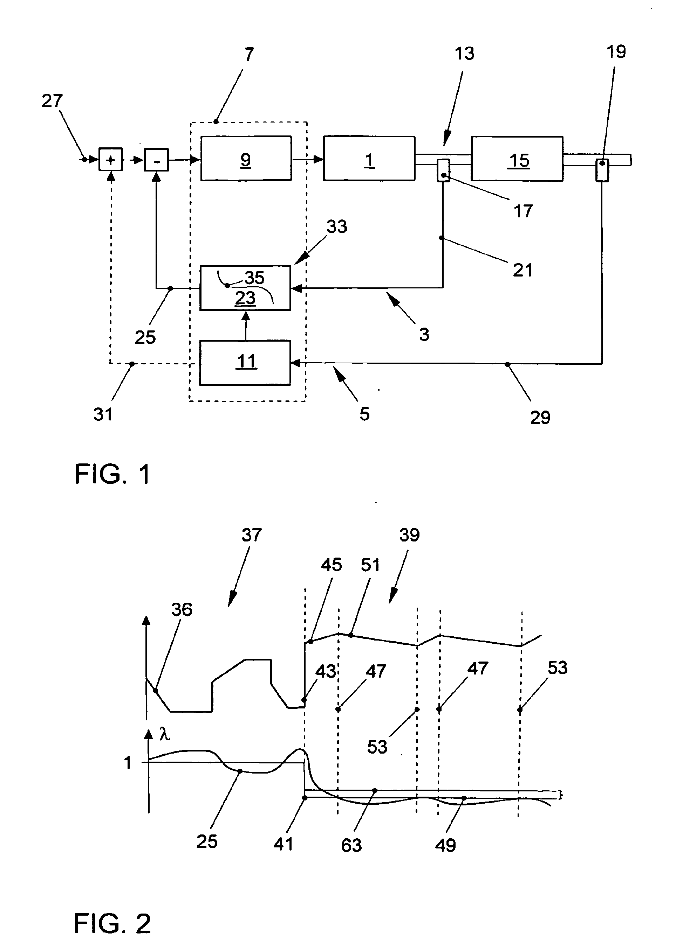

Figur 1 zeigt ein Blockschaltbild eines Verfahrens zur λ-Regelung bei einem Verbrennungsmotor 1. Der nicht näher dargestellte Verbrennungsmotor 1 weist zur λ-Regelung einen vorderen Regelkreis 3 und einen hinteren Regelkreis 5 auf. Außerdem ist eine Motorsteuerung 7 beziehungsweise Motorsteuereinheit zur Steuerung einer Gemischzusammensetzung des Verbrennungsmotors 1 vorgesehen. Die Motorsteuerung 7 ist in Figur 1 mittels einer gestrichelten Linie angedeutet und weist als Teil des vorderen Regelkreises 3 einen vorderen Regler 9 und als Teil des hinteren Regelkreises 5 einen hinteren Regler 11 des hinteren Regelkreises 5 auf.

Dem Verbrennungsmotor 1 ist eine Abgasanlage 13 mit einem Katalysator 15 nachgeschaltet. Als Messglied des vorderen Regelkreises 3 weist die Abgasanlage 13 eine dem Katalysator 15 vorgeschaltete vordere A-Sonde 17 auf. Als Messglied des hinteren Regelkreises 11 weist die Abgasanlage 13 außerdem eine dem Katalysator 15 nachgeschaltete hintere λ-Sonde 19 auf. Der hintere Regler 11 kann vorteilhaft eine systematische Gemischabweichung ermitteln, um beispielsweise auf eine Alterung der vorderen A-Sonde 17 zu schließen.

Mittels der vorderen A-Sonde 17, die als Sprung-λ-Sonde ausgelegt ist, beispielsweise nach dem Nernst-Prinzip, kann ein vorderes Sondensignal 21 gewonnen werden. Das vordere Sondensignal 21 charakterisiert einen Sauerstoffgehalt eines in der Abgasanlage 13 geführten AbgasMassenstroms stromaufwärts des Katalysators 15.

Der vordere Regelkreis 3 beziehungsweise der dazu gehörige vordere Regler 9 kann zur Regelung einer sogenannten λ-Modulation ausgelegt sein, wobei A-Werte > 1 und < 1 bei der Gemischbildung des Verbrennungsmotors 1 eingestellt werden, wobei als Zielvorgabe im Mittel ein λ-Wert = 1 eingeregelt wird.

Der hintere Regelkreis 5 kann mittels der hinteren A-Sonde 19, die beispielsweise und üblicherweise als Sprung-λ-Sonde ausgelegt sein kann, eine unerwünschte λ-Abweichung ermitteln. Hierzu kann ein hinteres Sondensignal 29 der hinteren A-Sonde 19 dem hinteren Regler 11 zugeführt werden, der zur Kompensation der unerwünschten λ-Abweichung dem Sollwert 27 einen Korrekturwert 31 hinzuaddieren kann, also beispielsweise eine Trim-Regelung ermöglicht. Der Korrekturwert 31 ist in Figur 1 gestrichelt dargestellt.

Der hintere Regler 11 weist eine zusätzliche Wirkverbindung zur Einflussnahme auf den vorderen Regelkreis 3 auf. Hierzu kann der hintere Regler 11 auf die Umrechnungsvorschrift 23 adaptierend beziehungsweise korrigierend einwirken.

Figur 2 zeigt ein Diagramm des aus dem vorderen Sondensignal 21 mittels der Umrechnungsvorschrift 23 gewonnenen Lambda-Wertes 25 über der Zeit zusammen mit einer dazugehörigen Einspritzmenge 36, ebenfalls über der Zeit. Das Diagramm gemäß Figur 2 ist in einen ersten Betriebsbereich 37 mit einer im Wesentlichen stöchiometrischen Gemischzusammensetzung und einen zweiten Betriebsbereich 39 mit einer im wesentlichen fetten Gemischzusammensetzung eingeteilt. Der erste Betriebsbereich 37 wird an einem Schaltpunkt 41 in den zweiten fetten Betriebsbereich 39 umgeschaltet.

Das erfindungsgemäße Verfahren weist zunächst folgende Schritte auf:
- Ermitteln einer Korrelation 35 durch Korrelieren des Sondensignals 21 der vorderen λ-Sonde 17 mit einer Gemischzusammensetzung,
- Betreiben des Verbrennungsmotors in Betriebsbreichen 39 mit Kraftstoff-Überschuss oder mit Kraftstoff-Mangel,
- Beeinflussen der Gemischzusammensetzung unter Zuhilfenahme des Sondensignals 21 der vorderen A-Sonde 17 und der Korrelation mittels der Motorsteuerung 7 unter bestimmten Voraussetzungen, wie noch genauer dargestellt wird.

Unter Korrelation wird ein beliebiger Wirkzusammenhang, insbesondere eine wechselseitige Beziehung, verstanden.

In einer bevorzugten Ausführungsform der Korrelation 35 wird das vordere Sondensignal 21 mittels einer Umrechnungsvorschrift 23 in einen A-Wert 25 umgerechnet. Dieser λ-Wert 25 wird zur Beeinflussung der Gemischzusammensetzung zugrunde gelegt. Beispielsweise kann direkt auf diesem A-Wert 25 geregelt werden. Der mittels der Umrechnungsvorschrift 23 errechnete λ-wert 25 kann von einem Sollwert 27 abgezogen und dem vorderen Regler 9 zugeführt werden. Die Umrechnungsvorschrift 23 kann eine Kennlinie 35 zur Umrechnung des Sondensignals der vorderen A-Sonde 17 in den A-Wert 25 aufweisen.

Üblicherweise wirkt die Abgasanlage, insbesondere aufgrund der Laufzeit des Abgases und Vermischungseffekten, als Verzögerungsglied, so dass die Gemischänderungen zeitversetzt entsprechende Signaländerungen der λ-Sonde hervorrufen. Vorteilhaft wird bei dem Korrelieren diese Zeitverzögerung anhand des Verlaufes der Signaländerungen der λ-Sonde und/oder zusätzlich durch Kenntnis der Dimensionierung der Abgasanlage sowie des darin geführten Abgasmassenstroms abgeschätzt.

Insbesondere durch Alterung und/oder Vergiftung der vorderen A-Sonde 17 kann es zu Veränderungen der Sondenkennlinie 35 kommen. in diesem Fall stimmt die vorgegebene Korrelation 35 zwischen dem vorderen Sondensignal 21 und der Gemischzusammensetzung nicht mehr vollständig. Die Genauigkeit der gegebenenfalls angepassten Korrelation zwischen dem vorderen Sondensignal 21 und der Gemischzusammensetzung sinkt mit zunehmender Gemischabweichung hinter dem Katalysator 15. Ab einem bestimmten Wert kann daher nicht mehr sichergestellt werden, dass die auf Basis des vorderen Sondensignals 21 angenommene Gemischzusammensetzung in Betriebsbereichen mit Kraftstoffüberschuss oder Kraftstoffmangel tatsächlich noch innerhalb tolerierbarer Grenzen liegen. Daher wird vorteilhaft nur solange in fetten bzw. mageren Betriebsbereichen das vordere Sondensignal 21 zur Gemischbeeinflussung benutzt, wie eine systematische Gemischabweichung hinter dem Katalysator 15 im Bereich zwischen vorgegebenen Schwellwerten liegt.

Die Korrelation wird vorzugsweise auch im geregelten stöchiometrischen Motorbetrieb zum Beeinflussen der Gemischzusammensetzug eingesetzt. Eine systematische Gemischabweichung wird sich daher auch in diesem Betrieb hinter dem Katalysator 15 einstellen, welche mit Hilfe bekannter Verfahren erkannt werden kann.

Bei einer ermittelten unerwünschten λ-Abweichung mittels der hinteren A-Sonde 19 wird vorzugsweise die Umrechnungsvorschrift 23 des vorderen Regelkreises 3 so angepasst, dass die unerwünschte λ-Abweichung eliminiert oder zumindest auf ein Minimum reduziert wird. Vorteilhaft können daher mittels der Adaption der Umrechnungsvorschrift 23 Fehler und/oder Toleranzen der vorderen A-Sonde 17 eliminiert werden. Darüber hinaus können auch andere Störgrößen herausgerechnet werden. Zum Berücksichtigen nur langfristig wirkender Veränderungen oder Fehler kann eine entsprechende Dämpfung vorgesehen sein.

Bei der Adaption der Umrechnungsvorschrift 23 kann die hinterlegte Kennlinie 35 angepasst beziehungsweise verändert werden. Ferner können bei der Ermittlung der systematischen Gemischabweichung und der Adaption der Umrechungsvorschrift 23 zumindest ein in der Abgasanlage 13 geführter Sauerstoff-Massenstrom sowie ein Sauerstoff-Füllstand des Katalysators 15 berücksichtigt werden. Entsprechende Verfahren zur Ermittlung der systematischen Gemischabweichung und der Adaption der Umrechungsvorschrift 23 sind beispielsweise in den noch nicht veröffentlichten deutschen Anmeldungen derselben Anmelderin mit den Aktenzeichen DE 10 2007 016 276.8, DE 10 2007 015 362.9 sowie DE 10 2007 029 029.4 beschrieben, die hiermit jeweils durch vollinhaltliche Bezugnahme, insbesondere auf die Zeichnung sowie die dazugehörige Beschreibung, zum Inhalt dieser Anmeldung gemacht werden.

Bei Einflussnahme auf die Messstrecke 33 des vorderen Regelkreises 3 durch Adaption der Umrechnungsvorschrift ist es denkbar, auf die Wirkverbindung mittels des Korrekturwertes 31 zu verzichten, also keinen Korrekturwert 31 in dem hinteren Regler 11 zur Korrektur des Sollwertes 27 zu generieren.

In Figur 2 unten dargestellt, ist ersichtlich, dass der A-Wert 25 in dem ersten Betriebsbereich 37 im Wesentlichen im Mittel Lambda = 1 beträgt und entsprechend um diesen Wert oszilliert. Um diese Oszillation zu erreichen, kann die in Figur 2 oben dargestellte Einspritzmenge 36 entsprechende Veränderungen, beispielsweise Sprünge, ansteigende/abfallende Rampen, sich daran anschließende Plateauphasen, jeweils abwechselnd in entgegengesetzter Richtung, aufweisen.

Am Schaltpunkt 41 wird zunächst mittels eines Sprunges 43 der Einspritzmenge 36 eine Kraftstoffzugabe eingestellt. Bei dem zweiten Betriebsbereich 39 handelt es sich also um einen Betriebsbereich mit Kraftstoffüberschuss. Es ist ersichtlich, dass als Reaktion hierauf der λ-Wert 25 absinkt. An den Sprung 43 schließt sich eine ansteigende Rampe 45 der Einspritzmenge 36 an. Die Kraftstoffzugabe wird also weiter angehoben. Die Rampe 45 erfolgt gesteuert bis der A-Wert 25 einen λ-Schwellwert 49 erreicht bzw. unterschreitet. Der λ-Schwellwert 49 ist in Figur 2 als eine horizontale Gerade eingezeichnet. Bei Erreichen des λ-Schwellwertes 49 wird die ansteigende Rampe 45 an einem ersten Regelschaltpunkt 47, der in Figur 2 als senkrechte gepunktete Linie angedeutet ist, in eine abfallende Rampe 51 umgeschaltet.

Mittels der abfallenden Rampe 51 wird die Kraftstoffzugabe wieder erniedrigt. Die abfallende Rampe 51 wird so lange gesteuert, bis der λ-Wert 25 dem λ-Schwellwert 49 wieder erreicht bzw. überschreitet, wobei an einem zweiten Regelschaltpunkt 53 von der abfallenden Rampe 51 wieder auf die ansteigende Rampe 45 umgeschaltet wird. Der zweite Regelschaltpunkt 53 ist in Figur 2 ebenfalls als eine senkrecht stehende gepunktete Linie angedeutet.

Vorteilhaft ist die Steigung der ansteigenden Rampe 45 größer als die negative Steigung der abfallenden Rampe 51. In Reaktion darauf schwingt der in Figur 2 unten eingezeichnete λ-Wert 25 stark asymmetrisch um den vorgegebenen λ-Schwellwert 49. Es ist ersichtlich, dass durch diese Maßnahme der sich ergebende λ-Wert 25 nur in einem vergleichsweise geringen Maße und während einer vergleichsweise kurzen Zeitdauer oberhalb des λ-Schwellwertes 49 liegt. Dies kann dazu ausgenutzt werden, den eingeregelten A-Wert 25 unterhalb eines gewünschten λ-Sollwertes, also wie in Figur 2 gezeigt, sicher in dem Betriebsbereich 39 mit Kraftstoffüberschuss zu halten.

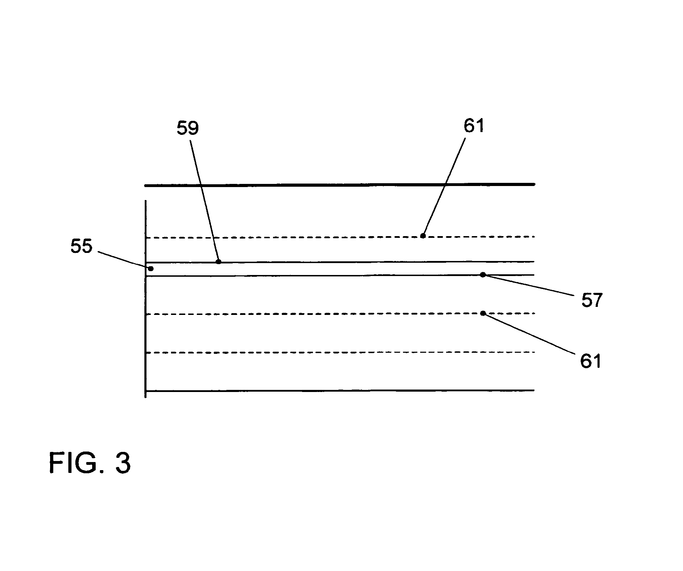

Im Betriebsbereich 39 arbeitet der vordere Regler 9 als Zwei-Punkt-Regler beziehungsweise realisiert eine Zwei-Punkt-Regelung. Vorteilhaft kann der Zwei-Punkt-Regelung zugrunde liegende λ-Schwellwert 49 an eine in Figur 3 dargestellte systematische Gemischabweichung 55 angepasst werden. Figur 3 zeigt ein Diagramm der mithilfe des hinteren Sondensignals 29 ermittelbaren systematischen Gemischabweichung 55 über der Zeitachse. Zu erkennen ist eine Lambda = 1 Linie 57 und ein mittels des hinteren Sondensignals 29 tatsächlich ermittelter λ-Wert >1, der mittels einer oberhalb der Lambda = 1 Linie 57 eingezeichneten Linie 59 symbolisiert ist. Die Lage der Lambda = 1 Linie 57 zu der Linie 59 ist ein Maß für die systematische Gemischabweichung 55. Vorteilhaft ist es möglich, zu überwachen, inwieweit sich die systematische Gemischabweichung innerhalb vorgegebenen Grenzen, also unterhalb und/oder oberhalb von vorgegebenen Schwellwerten befindet. Diese oberen und unteren Schwellwerte sind in Figur 3 mittels zweigepunkteten Linien 61 beispielhaft eingezeichnet. In der Darstellung gemäß Figur 3 befindet sich also die systematische Gemischabweichung in einem noch tolerierbaren Bereich.

Vorteilhaft kann, falls die systematische Gemischabweichung 55, also die Linie 59 die obere Linie 61 überschreitet oder die untere Linie 61 unterschreitet, die in Figur 2 dargestellte Zwei-Punkt-Regelung des zweiten Betriebsbereiches 39 in eine übliche vorgesteuerte Betriebsweise mit Kraftstoff-Überschuss oder Kraftstoff-Mangel umgeschaltet werden, also ohne eine Beachtung des gemessenen beziehungsweise ermittelten A-Wertes 25.

In Figur 2 ist zur Verdeutlichung der Reaktion auf die in Figur 3 dargestellte ermittelte systematische Gemischabweichung 55 ein motorischer Soll-Lambda-Wert 63 stromauf des Motors 1 eingezeichnet. Der Abstand zwischen dem motorischen Soll-Lambda-Wert 63 und dem für die Lambda-Regelung festgelegten Soll-Lambda-Wert 49 wird abhängig von der ermittelten systematischen Gemischabweichung 55 festgelegt.

Die Regelung in einem weiteren, in Figur 2 nicht dargestellten Betriebsbereich mit einer mageren Gemischzusammensetzung kann analog wie oben dargestellt erfolgen

In einer weiteren Ausführungsform der Erfindung ist anstelle der in Figur 2 gezeigten Zwei-Punkt-Regelung eine kontinuierliche λ-Regelung mit einer Breitband Lambdasonde vorgesehen.

Vorteilhaft wird im Vergleich zu herkömmlichen Verfahren während des Betriebsbereiches 39 mit einer fetten Gemischbildung und während eines analogen Betriebsbereiches mit einer mageren Gemischbildung der λ-Wert 25 eingeregelt. Im Vergleich zu einer mit Toleranzen behafteten Vorsteuerung der Gemischzusammensetzung kann so ein genauerer A-Wert 25 eingestellt werden, was insbesondere bei Betriebszuständen mit Kraftstoffüberschuss eine deutliche Einsparung an Kraftstoff ermöglicht. Es ist beispielsweise möglich, Vorsteuertoleranzen von bis zu 5 % einzusparen. Dabei muss beispielsweise nicht ein A-Wert von 0,91 eingestellt werden, sondern es genügt eine Regelung mit dem λ-Schwellwert 0,96. Diese Anhebung des λ-Wertes 25 ist gleichbedeutend mit einer deutlichen Kraftstoffeinsparung.

Bei dem erfindungsgemäßem Verfahren, wird das Signal 21 der vorderen λ-Sonde 17, beispielsweise ausgeführt als Sprung-λ-Sonde, vor dem Katalysator 15 in den Betriebsbereichen mit Kraftstoffüberschuss oder Kraftstoffmangel direkt mit der Gemischzusammensetzung korreliert und die Gemischzusammensetzung des Verbrennungsmotors 1 unter Zuhilfenahme dieses vorderen Sondensignals 21 beeinflusst wird, solange eine mittels der hinteren λ-Sonde 19 bzw. einer entsprechenden Messvorrichtung hinter dem Katalysator 15 ermittelte systematische Gemischabweichung 55 vordefinierte Schwellwerte 61 nicht überschreitet. Die Ermittlung der Gemischabweichung 55 erfolgt in Betriebszuständen, beispielsweise auch im ersten Betriebszustand 37, in denen zur Regelung der Gemischzusammensetzung des Verbrennungsmotors 1 dieselbe Korrelation zwischen dem vorderen Sondensignal 21 und der Gemischzusammensetzung benutzt wird wie in den Betriebsbereich, beispielsweise im zweiten Betriebsbereich 39, mit Kraftüberschuss oder Kraftstoffmangel. Vorteilhaft wird erreicht, dass nur die tatsächlich notwendige Menge an Kraftstoff benutzt wird und keine Vorsteuertoleranzen berücksichtigt werden müssen.

Es ist denkbar, die Gemischzusammensetzung gesteuert zu verstellen, bis der ermittelte λ-Wert 25 vorbestimmte λ-Schwellwerte 49, beispielsweise einen definierten λ-Sollwert, überschreitet, unterschreitet und/oder erreicht.

Außerdem ist es denkbar, diesen vorbestimmten λ-Schwellwert 49 zusätzlich abhängig zu machen von einem Wert der erkannten systematischen Gemischabweichung 55 hinter dem Katalysator 15.

In einer weiteren Ausführungsform kann zur Berechnung des λ-Wertes 25 nicht das tatsächlich gemessene Signal der vorderen λ-Sonde 17 verwendet werden, sondern ein mittels geeignetem Verfahren angepasstes Signal. Alternativ kann der berechnete λ-Wert 25 selbst mittels solcher Korrekturverfahren angepasst werden.

Es ist denkbar, die Freigabe des vorliegenden Verfahrens zusätzlich daran zu koppeln, dass in einem Fahrprofil bereits ausreichend Gelegenheit zur Ermittlung der systematischen Abweichung 55 gegeben war.

Da der weit überwiegende Teil in einer Vielzahl von Kraftfahrzeugen verwendeten vorderen Lambdasonden 17 über ihre jeweilige Lebensdauer nur eine geringere Alterung und/oder Vergiftung erfährt, kann das beschriebene Verfahren bei vielen der verwendeten bzw. in dem jeweiligen Kraftfahrzeug verbauten vorderen (Sprung-)Lambdasonden 17 statt der üblichen Steuerung im Fett bzw. Magerbetrieb angewendet werden. Damit kann/können bei einer vergleichsweise großen Anzahl von Kraftfahrzeugen die notwendige Kraftstoffanreicherung in Betriebsbereichen mit fetter motorischer Gemischzusammensetzung auf das notwendige Maß beschränkt und somit Verbrauchs- und Umweltbelastungen reduziert werden.

### Bezugszeichenliste

- 1: Verbrennungsmotor
- 3: vorderer Regelkreis
- 5: hinterer Regelkreis
- 7: Motorsteuerung
- 9: vorderer Regler
- 11: hinterer Regler
- 13: Abgasanlage
- 15: Katalysator
- 17: vordere A-Sonde
- 19: hintere λ-Sonde
- 21: vorderes Sondensignal
- 23: Umrechnungsvorschrift
- 25: λ-Wert
- 27: Sollwert
- 29: hinteres Sondensignal
- 31: Korrekturwert
- 33: Messstrecke
- 35: Kennlinie
- 36: Einspritzmenge
- 37: erster Betriebsbereich
- 39: zweiter Betriebsbereich
- 41: Schaltpunkt
- 43: Sprung
- 45: ansteigende Rampe
- 47: erster Regelschaltpunkt
- 49: λ-Schwellwert
- 51: abfallende Rampe
- 53: zweiter Regelschaltpunkt
- 55: systematische Gemischabweichung
- 57: Linie
- 59: Linie
- 61: Linie
- 63: adaptierter λ-Schwellwert

## Patentansprüche

1. Verfahren zur λ-Regelung bei einem Verbrennungsmotor (1) mit einer Motorsteuerung (7) zur Gemischbildung, einer in einer Abgasanlage (13) des Verbrennungsmotors (1) angeordneten vorderen A-Sonde (17) zur Erfassung eines einen vorderen Sauerstoffgehalt eines in der Abgasanlage (13) stromaufwärts eines in der Abgasanlage (13) angeordneten Katalysators (15) geführten Abgases charakterisierenden vorderen Sondensignals (21) und einer hinteren Sonde, mit folgenden Schritten:
- Ermitteln einer Korrelation durch Korrelieren des Sondensignals (21) der vorderen λ-Sonde (17) mit einer Gemischzusammensetzung,
- Betreiben des Verbrennungsmotors (1) in Betriebsbreichen (39) mit Kraftstoff-Überschuss oder mit Kraftstoff-Mangel,
- Ermitteln einer systematischen Gemischabweichung (55) mittels des hinteren Sondensignals (29),
- Vergleichen der ermittelten systematischen Gemischabweichung (55) mit vordefinierten Schwellwerten (61),
- Beeinflussen der Gemischzusammensetzung unter Zuhilfenahme des vorderen Sondensignals (21) der vorderen A-Sonde (17) und der Korrelation, falls die ermittelte systematische Gemischabweichung (55) zwischen den vordefinierten Schwellwerten (61) liegt.

2. Verfahren nach dem vorhergehenden Anspruch, mit folgendem Schritt:
- Ermitteln der systematischen Gemischabweichung (55) in weiteren Gemischbereichen (37), insbesondere mit im wesentlichen stöchiometrischer Gemischzusammensetzung, wobei in den weiteren Gemischbereichen (37) eine Regelung der Gemischzusammensetzung mittels der Korrelation erfolgt.

3. Verfahren nach einem der vorhergehenden Ansprüche, mit zumindest einem der folgenden Schritte:
- Ermitteln eines A -Wertes (25) mittels des vorderen Sondensignals (21) und einer Umrechnungsvorschrift (23),
- Beeinflussen der Gemischzusammensetzung unter Zuhilfenahme des ermittelten A-Wertes (25).

4. Verfahren nach einem der vorhergehenden Ansprüche, mit zumindest einem der folgenden Schritte:
- Regeln und/oder Einstellen der Gemischzusammensetzung mittels eines eine Zwei-Punkt-Regelung realisierenden vorderen Reglers (9),
- Umschalten des vorderen Reglers (9) jeweils falls der ermittelte A-Wert (25) einen vordefinierten A-Schwellwert erreicht, überschreitet oder unterschreitet,
- Umschalten des vorderen Reglers (9) jeweils falls der ermittelte λ-Wert (25) einen vordefinierten fetten λ-Schwellwert (49) oder einen mageren λ-Schwellwert erreicht, überschreitet oder unterschreitet.

5. Verfahren nach Anspruch 4, mit folgendem Schritt:
- Steuern der Gemischzusammensetzung zwischen dem jeweiligen Umschalten in einer ersten ansteigenden Rampe (45) und in einer zweiten fallenden Rampe (51).

6. Verfahren nach Anspruch 5, wobei die Rampen (45,51) unterschiedliche Steigungen aufweisen.

7. Verfahren nach einem der vorhergehenden Ansprüche 4 bis 6, wobei der fette λ-Schwellwert (49) und/oder der magere λ-Schwellwert von der ermittelten systematischen Gemischabweichung (55) abhängig ist/sind.

8. Verfahren nach einem der vorhergehenden Ansprüche, mit zumindest einem der folgenden Schritte:
- Adaptieren und/oder Korrigieren der Umrechnungsvorschrift (23) mittels und/oder unter Berücksichtigung der ermittelten systematischen Gemischabweichung (55),
- Ermitteln des λ-Wertes (25), wobei das Sondensignal (21) und/oder die Umrechnungsvorschrift (23) der systematischen Gemischabweichung (55) entgegenwirkend adaptiert und/oder korrigiert werden.

9. Verfahren nach einem der vorhergehenden Ansprüche, wobei es sich bei der vorderen A-Sonde (17) um eine Sprung-A-Sonde handelt.

10. Kraftfahrzeug mit einem und/oder ausgerüstet zur Realisierung eines Verfahrens nach einem der vorhergehenden Ansprüche.

## Claims

1. Method for λ regulation in an internal combustion engine (1) having a motor control system (7) for forming mixtures, a front λ sensor (17), which is arranged in an exhaust gas system (13) of the internal combustion engine (1), for detecting a front sensor signal (21), which characterizes a front oxygen content of an exhaust gas which is routed in the exhaust gas system (13) upstream of a catalyst (15) which is arranged in the exhaust gas system (13), and a rear sensor, comprising the following steps:
- ascertaining a correlation by correlating the sensor signal (21) of the front λ sensor (17) with a mixture composition,
- operating the internal combustion engine (1) in operating ranges (39) with a fuel excess or with a fuel deficit,
- ascertaining a systematic mixture deviation (55) by means of the rear sensor signal (29),
- comparing the ascertained systematic mixture deviation (55) with predefined threshold values (61),
- influencing the mixture composition with the aid of the front sensor signal (21) of the front λ sensor (17) and the correlation, if the ascertained systematic mixture deviation (55) is between the predefined threshold values (61).

2. Method according to the preceding claim, comprising the following step:
- ascertaining the systematic mixture deviation (55) in further mixture ranges (37), in particular with a substantially stoichiometric mixture composition, wherein the mixture composition is regulated by means of the correlation in the further mixture ranges (37).

3. Method according to either of the preceding claims, comprising at least one of the following steps:
- ascertaining a λ value (25) by means of the front sensor signal (21) and a conversion rule (23),
- influencing the mixture composition with the aid of the ascertained λ value (25).

4. Method according to one of the preceding claims, comprising at least one of the following steps:
- regulating and/or setting the mixture composition by means of a front regulator (9) which realizes a 2-point regulation operation,
- switching over the front regulator (9) in each case if the ascertained λ value (25) reaches, exceeds or undershoots a predefined λ threshold value,
- switching over the front regulator (9) in each case if the ascertained λ value (25) reaches, exceeds or undershoots a predefined rich λ threshold value (49) or a lean λ threshold value.

5. Method according to Claim 4, comprising the following step:
- controlling the mixture composition between the respective switching over operation to a first rising ramp (45) and to a second falling ramp (51).

6. Method according to Claim 5, wherein the ramps (45, 51) have different gradients.

7. Method according to one of the preceding Claims 4 to 6, wherein the rich λ threshold value (49) and/or the lean λ threshold value are/is dependent on the ascertained systematic mixture deviation (55).

8. Method according to one of the preceding claims, comprising at least one of the following steps:
- adapting and/or correcting the conversion rule (23) by means of and/or taking account of the ascertained systematic mixture deviation (55),
- ascertaining the λ value (25), wherein the sensor signal (21) and/or the conversion rule (23) are/is adapted and/or corrected so as to counteract the systematic mixture deviation (55).

9. Method according to one of the preceding claims, wherein the front λ sensor (17) is a step-change λ sensor.

10. Motor vehicle comprising and/or designed to realize a method according to one of the preceding claims.

## Revendications

1. Procédé de régulation λ d'un moteur à combustion interne (1) présentant
une commande de moteur (7) pour la formation du mélange,
une sonde λ (17) située en avant dans l'installation (13) de gaz d'échappement du moteur à combustion interne (1) et saisissant un signal (21) de sonde avant qui caractérise la teneur avant en oxygène d'un gaz d'échappement amené dans l'installation (13) de gaz d'échappement en amont d'un catalyseur (15) disposé dans l'installation (13) de gaz d'échappement et
une sonde arrière,
le procédé présentant les étapes suivantes :
détermination d'une corrélation en corrélant le signal (21) de la sonde λ avant (17) par rapport à une composition de mélange,
gestion du moteur à combustion interne (1) dans des plages de fonctionnement (39) à excès de carburant ou manque de carburant,
détermination d'un écart de mélange systématique (55) au moyen du signal de sonde arrière (29),
comparaison de l'écart systématique de mélange (55) ainsi déterminé à des valeurs de seuil (61) prédéfinies et
action sur la composition de mélange à l'aide du signal de sonde avant (21) de la sonde λ, avant (17) et de la corrélation au cas où l'écart systématique de mélange (55) déterminé est situé entre les valeurs de seuil (61) prédéfinies.

2. Procédé selon la revendication précédente, présentant l'étape suivante :
détermination de l'écart systématique de mélange (55) dans d'autres plages de mélange (37), en particulier avec une composition de mélange essentiellement stoechiométrique, une régulation de la composition de mélange au moyen de la corrélation s'effectuant dans les autres plages de mélange (37).

3. Procédé selon l'une des revendications précédentes, et présentant au moins l'une des étapes suivantes :
détermination de la valeur (25) de λ au moyen du signal de sonde avant (21) et d'une prescription de conversion (23) et
action sur la composition de mélange à l'aide de la valeur (25) de λ.

4. Procédé selon l'une des revendications précédentes et présentant au moins l'une des étapes suivantes :
régulation et/ou réglage de la composition du mélange au moyen d'un régulateur avant (9) qui réalise une régulation deux points,
commutation du régulateur avant (9) au cas où la valeur déterminée (25) de λ atteint une valeur de seuil prédéfinie de λ, la dépasse ou ne l'atteint pas,
commutation du régulateur avant (9) au cas où la valeur (25) de λ déterminée atteint, dépasse ou n'atteint pas une valeur de seuil (49) de λ riche prédéfinie ou une valeur de seuil λ pauvre prédéfinie.

5. Procédé selon la revendication 4, présentant l'étape suivante :
commande de la composition du mélange entre chaque commutation dans une première pente montante (45) et une deuxième pente descendante (51).

6. Procédé selon la revendication 5, dans lequel les pentes (45, 51) présentent des angles de pente différents.

7. Procédé selon l'une des revendications 4 à 6 qui précèdent, dans lequel la valeur de seuil (49) de λ. riche et/ou la valeur de seuil de λ maigre dépendent de l'écart systématique de mélange (55) qui a été déterminé.

8. Procédé selon l'une des revendications précédentes, présentant au moins l'une des étapes suivantes :
adaptation et/ou correction de la prescription de conversion (23) au moyen et/ou en tenant compte de l'écart systématique de mélange (55) qui a été déterminé et
détermination de la valeur (25) de λ, le signal de sonde (21) et/ou la prescription de conversion (23) de l'écart systématique du mélange (55) étant adaptés et/ou corrigés dans des sens opposés.

9. Procédé selon l'une des revendications précédentes, dans lequel la sonde λ avant (17) est une sonde λ à saut.

10. Véhicule automobile doté d'un procédé selon l'une des revendications précédentes et/ou équipé pour le mettre en oeuvre.
